# EUROPÄISCHE PATENTSCHRIFT

(11) **EP 1 415 890 B1**
(45) Veröffentlichungstag und Bekanntmachung des Hinweises auf die Patenterteilung: **12.10.2005**
(21) Anmeldenummer: 03024260.6
(22) Anmeldetag: 22.10.2003
(51) Int. Cl.: B62D 5/04

(54) **Zahnstangen-Servolenkung für Fahrzeuge**
Vehicle power steering comprising a rack
Direction assistée à crémaillère pour véhicules

(30) Priorität: 22.10.2002 DE 10249120
(43) Veröffentlichungstag der Anmeldung: 06.05.2004
(73) Patentinhaber: ZF Lenksysteme GmbH, 73527 Schwäbisch Gmünd (DE)
(72) Erfinder: Fröhlich, Stefan, 73568 Zimmerbach (DE); Breu, Günther, 73574 Iggingen (DE); Fischer, Joachim, 73529 Schwäbisch Gmünd (DE)

(56) Entgegenhaltungen:
- EP-A- 0 741 067
- EP-B- 0 814 012
- PATENT ABSTRACTS OF JAPAN vol. 1999, no. 5, 31. Mai 1999 (1999-05-31) -& JP 11 043056 A (SHOWA), 16. Februar 1999 (1999-02-16)
- "LA BAGUE DE TOLERANCE, UN ELEMENT D'ASSEMBLAGE AUX MULTIPLES POSSIBILITES" MECANIC INTERNATIONAL, PROPAGANDE INTERNATIONALE, ANTWERP, BE, Nr. 2, 1963, Seiten 39-45, XP002013186 ISSN: 0771-274X

## Beschreibung

Die Erfindung betrifft eine Zahnstangen-Servolenkung für Fahrzeuge gemäß dem Oberbegriff des Anspruches 1.

Zahnstangen-Servolenkungen der vorgenannten Art sind aus der EP 0 814 012 B1 bekannt, und zwar bei koaxialer Anordnung des als Elektromotor ausgebildeten Servomotores zur Zahnstange und zur Zahnstange benachbart liegendem und diese umschließendem Rotor. Der Rotor ist gegen das Motorgehäuse über Wälzlager abgestützt und überlappt an seinem einen Ende eine in axialer Verlängerung des Rotors angeordnete und die Zahnstange ebenfalls umschließende Mutter eines Kugelumlaufgetriebes, das seitens der Zahnstange gewindeartige Umlaufbahnen für Mutter und Zahnstange verbindende Kugeln aufweist. Die Mutter ist an ihrem vom Rotor abgelegenen Ende gegen das Getriebegehäuse, ebenso wie der Rotor, wälzgelagert, und an ihrem in Überlappung zum Rotor liegenden Endbereich über ein drehmomentbegrenzendes Reibschlusselement gegen den Rotor abgestützt. Die Abstützung über das Reibschlusselement in Form eines mäanderförmig ausgeformten Spannringes erfolgt entweder ausschließlich, bei Begrenzung des Verformungsweges des Spannringes, durch beiderseits des Einbauraumes des Spannringes liegende Schultern der Mutter, oder kombiniert über die Schultern der Mutter und das Reibschlusselement, wobei die Schultern gegen den Rotor anliegen und durch den Reibkontakt zum Rotor einen Teil der Reibschlussverbindung zwischen Rotor und Mutter bilden.

Im erstgenannten Fall der ausschließlichen Abstützung der Mutter im Überlappungsbereich zum Rotor über das als Spannring ausgebildete Reibschlusselement ist das über die Vorspannung des Spannringes vorgegebene, drehmomentenabhängige Auslösemoment nur von den tribologischen Verhältnissen sowie der Beschaffenheit der zusammenwirkenden Flächen, so der Oberflächenbeschaffenheit und der Härte abhängig. Bedingt dadurch ist aber die Mutter gegenüber dem Rotor nicht exakt zentriert, so dass sich bei der im Regelfall über den Umfang nicht gleichförmigen Reibabstützung des Spannringes Deformationen und Rattererscheinungen ergeben. Im zweitgenannten Fall der reibschlüssigen Abstützung der Mutter gegen den Rotor ergänzend zum Spannring ist zwar eine wechselseitige Zentrierung der Mutter gegen den Rotor sichergestellt, der festgelegte Drehmomentengrenzwert ist aber einerseits von der Reibung zwischen Mutter und Rotor und andererseits zwischen Spannring und Rotor abhängig. Das führt insbesondere auch unter Toleranzgesichtspunkten zu schwer beherrschbaren Verhältnissen, die unter dem Gesichtspunkt einer Serienfertigung relativ große Toleranzen bezüglich des Drehmomentengrenzwertes nach sich ziehen.

Die JP 11 043056 A offenbart eine Zahnstangen-Servolenkung mit über ein Lenkgetriebe an die Zahnstange angeschlossenen manuellen Lenkeingabemittel und mit in einer Antriebsverbindung zur Zahnstange liegenden Servoantrieb, der ausgehend von einem über einen Servomotor beaufschlagten drehbaren Antriebsglied mit einem zahnstangenseitigen Antriebsglied über ein drehmomentbegrenzendes Reibschlusselement verbunden ist, welches in seiner Einbaulage zwischen Antriebsglied und Antriebsglied bei vorgegebener radialer Bauhöhe des Einbauraumes vorgespannt ist, wobei die Höhe des Einbauraumes durch zwei axial zueinander beabstandete, zwischen Antriebsglied und Abtriebsglied liegende Gleitlager vorgegeben ist. Als nachteilig erweist sich bei dieser Anordnung, dass durch die Eigenreibung der Gleitlager der Schwellwert des drehmomentbegrenzenden Reibschlusselementes verfälscht und nur unter Berücksichtigung der mit großem Aufwand zu ermittelnden Eigenreibung der Lager vorausbestimmt werden kann.

Der Erfindung liegt die Aufgabe zugrunde, eine Zahnstangenservolenkung der eingangs genannten Art dahingehend auszugestalten, dass sich auch in der Serienfertigung für den Drehmomentengrenzwert ein enges Toleranzband ergibt, und dies bei zweckmäßiger Ausgestaltung im Hinblick auf die Gestaltung des Antriebes zwischen Servomotor und Zahnstange in Leichtbauweise auch in Berücksichtigung schwingungstechnischer und geräuschlicher Aspekte.

Erreicht wird dies durch die Merkmale des Anspruches 1, denen zufolge die Abstützung zwischen Antriebsglied und Abtriebsglied, und damit bezogen auf Rotor und Mutter beim vorgenannten Stand der Technik, über reibungsarme Lager erfolgt, so dass konstruktiv die Höhe des Einbauraumes für den Spannring festgelegt ist und die diesbezüglich möglichen Toleranzen so klein sind, dass sie praktisch ohne Rückwirkung auf die Höhe des zu übertragenden Drehmomentes bleiben, womit auch eine definierte Festlegung des Drehmomentengrenzwertes möglich wird. Damit ist die notwendige Auslösesicherheit zur Vermeidung von Überlastungen gewährleistet, ungeachtet dessen, ob diese vom Servomotor ausgehen oder über das von Hand eingegebene Lenkmoment bedingt sind, beispielsweise bei Ausfall des Servomotores oder Blockade eines Antriebsgliedes in der Verbindung vom Servomotor zur Lenkwelle oder Zahnstange, da in jedem Fall die Lenkfähigkeit des Fahrzeuges erhalten bleiben muss.

Besonders zweckmäßig ist es in diesem Zusammenhang, wenn der Einbauraum zwischen den reibungsarmen Lagern liegt, da so über die axiale Länge des Spannringes gleiche Abstützverhältnisse gewährleistet werden können, entsprechend exakte Auslegung des Spannringes vorausgesetzt.

Als zweckmäßig erweist es sich des Weiteren, wenn dem Spannring sowohl im Abtriebsglied wie auch_im Antriebsglied eine aufnehmende Aussparung zugeordnet ist, so dass der Spannring in seiner axialen Lage fixiert ist und gegebenenfalls auch zur axialen Ausrichtung von Antriebsglied und Abtriebsglied genutzt werden kann. Insbesondere ist gegebenenfalls auch eine axiale Verspannung des Spannringes gegenüber dem Antriebsglied oder auch dem Abtriebsglied möglich, die auch zur Einstellung der Spannkraft, gegebenenfalls bei Überwölbung des Spannringes genutzt werden kann, so dass auch über einen Spannring bei leichter Bauweise hohe Spannkräfte aufgebracht werden können.

Weitere Einzelheiten und Merkmale der Erfindung ergeben sich aus den Ansprüchen. Ferner wird die Erfindung nachfolgend an Hand eines Ausführungsbeispieles mit weiteren Details erläutert. Es zeigen:
- Fig. 1: eine stark schematisierte Darstellung einer Ausgestaltung einer Zahnstangen-Servolenkung für Fahrzeuge, die mit unabhängiger Krafteinleitung auf die Zahnstange einerseits über Lenkrad und Lenkwelle mit nachgeordnetem Lenkgetriebe und andererseits über eine Servoeinheit arbeitet,
- Fig. 2: eine weitere Ausgestaltung einer Zahnstangenservolenkung, bei der die Servoeinheit auf die in der Verbindung zwischen Lenkrad und Lenkgetriebe liegende Lenkwelle aufgeschaltet ist,
- Fig. 3: eine schematisierte Schnittdarstellung des zahnstangenseitigen Abtriebsgliedes in Form eines Ritzels, das mit der Zahnstange kämmt und eines als Schneckenrad ausgebildeten Antriebsgliedes, das mit dem Abtriebsglied über ein drehmomentbegrenzendes Reibschlusselement bei gleichzeitiger reibungsarmer Lagerung verbunden ist, und
- Fig. 4: eine schematisierte, vergrößerte Darstellung des das Drehmoment begrenzenden Reibschlusselementes und der die Lagerung umfassenden Verbindung zwischen Antriebsglied und Abtriebsglied in vergrößerter und vereinfachter Darstellung.

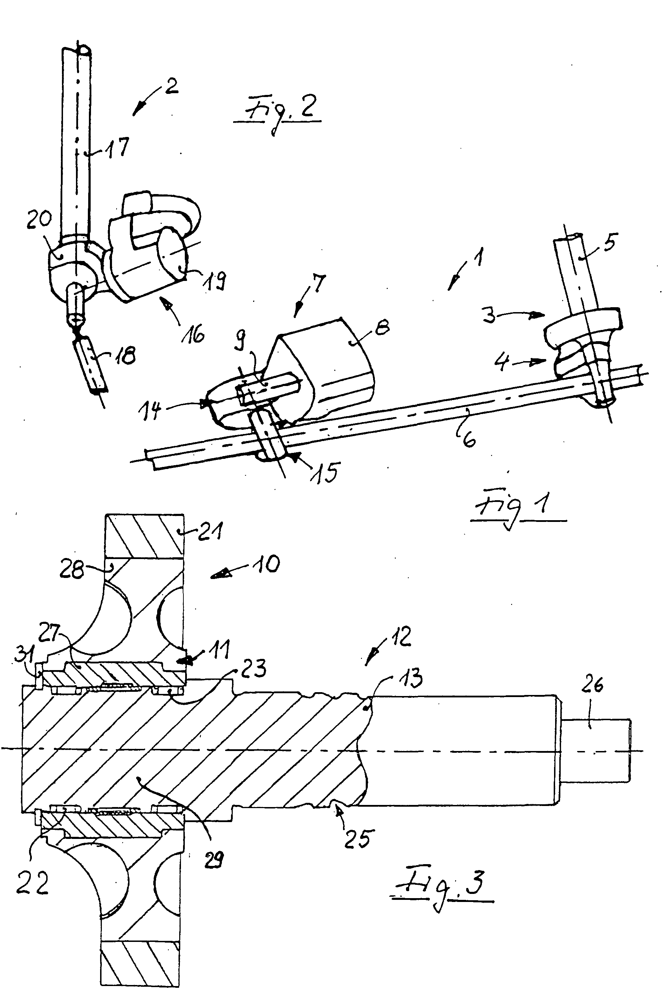

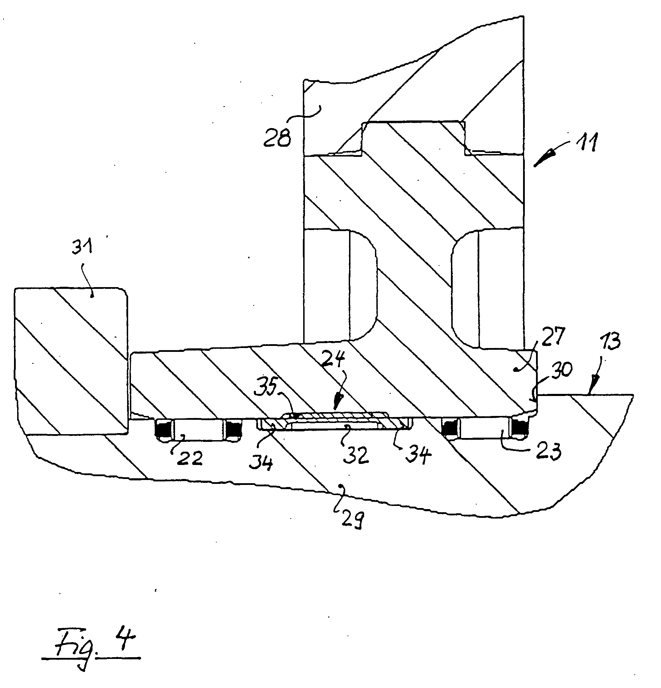

Die Fig. 1 und 2 zeigen im Grundaufbau verschiedene Ausgestaltungen von Fahrzeug-Servolenkungen 1 bzw. 2. Bei einer Fahrzeug-Servolenkung 1 gemäß Fig. 1 ist eine Lenkeinheit 3 bezüglich ihres Lenkgetriebes 4 und ihrer Lenkwelle 5 gezeigt, nicht aber das in Verbindung zur Lenkwelle 5 stehende Lenkrad, über das fahrerseitig das Lenkmoment eingegeben wird. Das Lenkgetriebe 4 arbeitet in üblicher Weise über ein nicht dargestelltes Ritzel auf eine Zahnstange 6. Ergänzend ist der Fahrzeug-Servolenkung 1 gemäß Fig. 1 eine Servoeinheit 7 zugeordnet, die einen Servomotor 8 umfasst, der, wie nur schematisch veranschaulicht, über eine Schnecke 9 ein Antriebsglied 10 in Form eines Schneckenrades 11 beaufschlagt, das mit einem Abtriebsglied 12 in Form eines Ritzels 13 verbunden ist, das mit der Zahnstange 6 zusammenwirkt. In Fig. 1 sind bezüglich des Antriebsgliedes 10 wie auch des Abtriebsgliedes 12 nur die zugehörigen Gehäuse 14 bzw. 15 angedeutet.

Während bei der Fahrzeug-Servolenkung 1 gemäß Fig. 1 die Servoeinheit 7 unmittelbar auf die Zahnstange 6 arbeitet, somit die Lenkeinheit 3 zur Servoeinheit 7 bezüglich der Verbindung zur Zahnstange 6 getrennte Einheiten bilden, ist bei der Fahrzeug-Servolenkung 2 gemäß Fig. 2 die Servoeinheit 16 der Lenkwelle 17 zugeordnet, die mit dem nicht gezeigten Lenkrad, wie schon zu Fig. 1 erläutert, verbunden ist. Die Lenkwelle 17 steht mit dem nicht gezeigten Lenkgetriebe über eine weiterführende gelenkige Wellenverbindung 18 in Verbindung, in Analogie zur Anordnung gemäß Fig. 1. Die Servoeinheit 16 umfasst wiederum einen Servomotor 19, der mit einem Antriebsglied verbunden ist, das koaxial zur Lenkwelle 17 liegt, die in diesem Fall auch das Abtriebsglied der Servoeinheit 16 bildet, so dass die Wellenverbindung 18 sowohl das von Hand aufgegebene Lenkmoment wie auch das servomotorisch aufgebrachte Lenkmoment zum nachfolgenden Lenkgetriebe, und über dieses auf die Zahnstange 6 überträgt. Bezüglich des Antriebsgliedes, das koaxial zur Lenkwelle 17 sitzt, ist wieder nur das zugehörige Gehäuse 20 sichtbar und die Verbindung des Antriebsgliedes zur Lenkwelle ist analog zu Fig. 3 gestaltet, wobei die Lenkwelle 17 in ihrem das als Schneckenrad ausgebildete Antriebsglied tragenden Bereich der Ritzelwelle 13 gemäß Fig. 3 entsprechend ausgebildet ist.

Fig. 3 veranschaulicht, dass das Schneckenrad 11 in seinem äußeren Umfangsbereich einen auf die Schneckenwelle abgestimmten Zahnkranz 21 trägt und radial innen zur Ritzelwelle über als Nadellager ausgebildete Lager 22 und 23 sowie einen Spannring 24 abgestützt ist, wobei bezüglich dieser Ausgestaltung auf Fig. 4 Bezug genommen wird. Das Ritzel 13 weist einen angedeuteten Verzahnungsbereich 25 auf, in dem es mit der Zahnstange 6 kämmt und im Ausführungsbeispiel auch einen Wellenansatz 26 am zum Schneckenrad 11 gegenüberliegenden Ende für eine nicht weiter gezeigte Lagerung im Gehäuse 14 aufweist.

In der vergrößerten Darstellung gemäß Fig. 4 ist vom Schneckenrad 11 lediglich der Nabenteil 27 und das daran anschließende Übergangsstück 28 zum Zahnkranz 21 gezeigt, sowie ein Ausschnitt vom Ritzel 13 mit dem in Überdeckung zum Schneckenrad 11 liegenden Wellenteil 29 des Ritzels, der radial abgesetzt eine Schulter 30 für das Schneckenrad 11 aufweist, das in Gegenrichtung über einen Haltering 31, beispielsweise einen Segerring oder dergleichen axial gesichert ist. Die Abstützung des als Antriebsglied 10 dienenden Schneckenrades 11 auf dem Wellenteil 29 des Ritzels 13 erfolgt über die beiden Lager 22 und 23, zwischen denen der Einbauraum 32 für ein drehmomentbegrenzendes Reibschlusselement in Form eines Spannringes 24 liegt, der in bekannter Weise - siehe hierzu beispielsweise die EP 0814 012 B1 - als offener Ringkörper mit gegenüber' seitlichen Randzonen 34 nach der Gegenseite, hier nach radial außen ausgeprägten über den längsmittleren Bereich axial verlaufenden Ausformungen 35 gestaltet ist.

Der radiale Abstand zwischen Ritzel 13 bzw. Ritzelwellenteil 29 und Nabenteil 27 des Schneckenrades 11 ist über die Lager 22 bzw. 23 vorgegeben, und damit auch die radiale Höhe des Einbauraumes 32 für den Spannring 24, der auf Grund der nahezu reibungsfreien Abstützung des Nabenteiles 27 des Schneckenrades 11 gegen den Wellenteil 29 des Ritzels 13 über die Lager 22 und 23 praktisch das alleinige, drehmomentübertragende und drehmomentbegrenzende Reibschlusselement bildet. Die Höhe des Einbauraumes 32 ist, abgesehen von kleinen Fertigungstoleranzen, auch in der Serienfertigung nahezu gleichbleibend, und dies auch unter allen Betriebsbedingungen, und es ist ebenso, von regulären Betriebsbedingungen ausgehend, die Reibung in den Lagern und über die Lager 22, 23 gleichbleibend nahezu vernachlässigbar, so dass über das drehmomentbegrenzende Reibschlusselement in Form des Spannringes 24 in sehr engen Grenzen das Grenzdrehmoment festgelegt werden kann, bei dem die normalerweise starre Antriebsverbindung unterbrochen wird und das Schneckenrad 11 gegenüber dem Ritzels 13 durchdreht und damit Überlastungen in der Anschlussverbindung zum Servomotor 7 ebenso ausschließt wie eine Blockade des von Hand zu übertragenden Lenkmomentes bei einem etwaigen Ausfall des Servomotores oder Störungen in der Antriebsverbindung zu diesem.

Im Hinblick auf die Verbindung zwischen dem Nabenteil 27 und dem Wellenteil 29 erweist es sich als zweckmäßig, wenn der Einbauraum 32 aufgeteilt ist auf eine Aussparung im Wellenteil 29 und eine Aussparung im Nabenteil 27, wobei die Aussparung im Nabenteil 27 die nach radial außen ausgeprägten Ausformungen 35 aufnimmt.

Die Aufteilung des Einbauraumes 32 in zwei radial einander gegenüberliegende Ausformungsbereiche macht es auch möglich, den Spannring 24 über die Ausformung 35 oder auch im radial gegenüberliegenden Bereich über die Randzonen 34 axial abzustützen oder auch zu verspannen, womit gegebenenfalls der Spannring 24 in seiner Härte bzw. in seinem elastischen Verhalten bezogen auf die jeweiligen Anforderungen abgestimmt werden kann, wobei entsprechende axiale Verspannungen zur Verhärtung genutzt werden können und dadurch eine besonders leichte und dünnwandige Ausbildung des Spannringes 24 möglich machen. Ferner kann dadurch der Spannring 24 auch zur axialen Fixierung des Schneckenrades 11 gegen das Ritzel 13 verwendet werden.

## Patentansprüche

1. Zahnstangen-Servolenkung für Fahrzeuge mit über ein Lenkgetriebe an die Zahnstange angeschlossenen manuellen Lenkeingabemittel, insbesondere einem Lenkrad, und mit in einer Antriebsverbindung zur Zahnstange liegendem Servoantrieb, der ausgehend von einem über einen Servomotor beaufschlagten, drehbaren Antriebsglied mit einem zahnstangenseitigen Abtriebsglied über ein drehmomentbegrenzendes Reibschlusselement verbunden ist, das durch einen Spannring gebildet ist, der in seiner Einbaulage zwischen Antriebsglied und Abtriebsglied, bei vorgegebener radialer Höhe des Einbauraumes, vorgespannt ist, wobei die Höhe des Einbauraumes (32) durch zwischen Antriebsglied (10) und Abtriebsglied (12) liegende, reibungsarme Lager (22, 23) vorgegeben ist,
**dadurch gekennzeichnet, daß** die reibungsarmen Lager (22, 23) durch Nadellager gebildet werden.

2. Zahnstangen-Servolenkung nach Anspruch 1,
**dadurch gekennzeichnet,**
**dass** der Einbauraum (32) zwischen zwei axial zueinander beabstandeten Lager (22, 23) liegt.

3. Zahnstangen-Servolenkung nach Anspruch 1 oder 2,
**dadurch gekennzeichnet,**
**dass** der Spannring (24) in einer Aussparung in einer der den Einbauraum (32) begrenzenden, einander gegenüberliegenden Umfangsflächen von Antriebsglied (10) und/oder Abtriebsglied (12) liegt.

4. Zahnstangen-Servolenkung nach Anspruch 3,
**dadurch gekennzeichnet,**
**dass** der Spannring (24) mit Abstand zu seinen Randzonen (34) mit axial verlaufenden Ausformungen (35) versehen ist, denen in der zugehörigen Umfangsfläche des Antriebsgliedes (10) oder des Abtriebsgliedes (12) eine Aussparung zugeordnet ist.

5. Zahnstangen-Servolenkung, nach einem der vorhergehenden Ansprüche,
**dadurch gekennzeichnet,**
**dass** der Spannring (24) radial gegenüberliegend zu der die Ausformungen (35) aufnehmenden Aussparung in einer zwischen Ausnehmungen für die Lager (22, 23) liegenden Aussparung angeordnet ist.

6. Zahnstangen-Servolenkung nach Anspruch 5,
**dadurch gekennzeichnet,**
**dass** die die Lager (22, 23) aufnehmenden Ausnehmungen dem Abtriebsglied (12) zugeordnet sind.

7. Zahnstangen-Servolenkung nach einem der vorhergehenden Ansprüche,
**dadurch gekennzeichnet,**
**dass** das Antriebsglied (10) durch ein Schneckenrad (11) gebildet ist.

8. Zahnstangen-Servolenkung nach einem der vorhergehenden Ansprüche,
**dadurch gekennzeichnet,**
**dass** das Abtriebsglied (12) durch ein mit der Zahnstange (6) in Eingriff stehendes Ritzel (13) gebildet ist.

9. Zahnstangen-Servolenkung nach einem der Ansprüche 1 bis 7,
**dadurch gekennzeichnet,**
**dass** das Abtriebsglied (12) mit der Lenkwelle (5) verbunden oder durch die Lenkwelle (5) gebildet ist.

10. Zahnstangen-Servolenkung nach Anspruch 9,
**dadurch gekennzeichnet,**
**dass** das Abtriebsglied (12) als auf der Lenkwelle (5) laufendes und mit der Lenkwelle (5) drehmomentübertragend verbundenes Element, insbesondere als Spindelmutter oder dergleichen ausgebildet ist.

## Claims

1. Rack-and-pinion power steering system for vehicles, having a manual steering input means, in particular a steering wheel, which is connected to the rack via a steering gear mechanism, and having a servo drive which is drive-connected to the rack and, starting from a rotatable drive member which is acted on via a servomotor, is connected to an output element on the rack side via a torque-limiting frictional connection element which is formed by a clamping ring which is preclamped between the drive member and the output member in its installed position in the event of a predefined radial height of the installation space, the height of the installation space (32) being predefined by low-friction bearings (22, 23) which lie between the drive member (10) and the output member (12), **characterized in that** the low-friction bearings (22, 23) are formed by needle bearings.

2. Rack-and-pinion power steering system according to Claim 1, **characterized in that** the installation space (32) lies between two bearings (22, 23) which are spaced apart from one another axially.

3. Rack-and-pinion power steering system according to Claim 1 or 2, **characterized in that** the clamping ring (24) lies in a cut-out of one of those circumferential faces of the drive member (10) and/or the output member (12) which limit the installation space (32) and lie opposite one another.

4. Rack-and-pinion power steering system according to Claim 3, **characterized in that** the clamping ring (24) is provided with axially extending shaped-out mouldings (35) at a spacing from its edge zones (34), a cut-out being assigned to the said shaped-out mouldings (35) in the associated circumferential face of the drive member (10) or of the output member (12).

5. Rack-and-pinion power steering system according to one of the preceding claims, **characterized in that**, lying radially opposite the cut-out which accommodates the shaped-out mouldings (35), the clamping ring (24) is arranged in a cut-out which lies between recesses for the bearings (22, 23).

6. Rack-and-pinion power steering system according to Claim 5, **characterized in that** the recesses which accommodate the bearings (22, 23) are assigned to the output member (12).

7. Rack-and-pinion power steering system according to one of the preceding claims, **characterized in that** the drive member (10) is formed by a worm gear (11).

8. Rack-and-pinion power steering system according to one of the preceding claims, **characterized in that** the output member (12) is formed by a pinion (13) which is in engagement with the rack (6).

9. Rack-and-pinion steering system according to one of Claims 1 to 7, **characterized in that** the output member (12) is connected to the steering shaft (5) or is formed by the steering shaft (5).

10. Rack-and-pinion power steering system according to Claim 9, **characterized in that** the output member (12) is configured as an element which runs on the steering shaft (5) and is connected to the steering shaft (5) so as to transmit torque, in particular as a spindle nut or the like.

## Revendications

1. Direction assistée à crémaillère pour véhicules, comprenant un moyen de commande de direction manuel raccordé à la crémaillère par le biais d'un mécanisme de direction, notamment un volant de direction, et un servomoteur en liaison d'entraînement avec la crémaillère, qui est connectée à partir d'un organe d'entraînement rotatif, sollicité par le biais d'un servomoteur, à un organe de sortie du côté de la crémaillère, par le biais d'un élément à connexion par friction limitant le couple, qui est formé par un collier de serrage qui, dans sa position montée entre l'organe d'entraînement et l'organe de sortie, pour une hauteur radiale prédéfinie de l'espace de montage, est précontraint, la hauteur de l'espace de montage (32) étant prédéfinie par des paliers sans frottement (22, 23), situés entre l'organe d'entraînement (10) et l'organe de sortie (12), **caractérisée en ce que** les paliers sans frottement (22, 23) sont formés par des paliers à aiguilles.

2. Direction assistée à crémaillère selon la revendication 1,
**caractérisée en ce que**
l'espace de montage (32) est situé entre deux paliers (22, 23) espacés axialement l'un de l'autre.

3. Direction assistée à crémaillère selon la revendication 1 ou 2,
**caractérisée en ce que**
le collier de serrage (24) se trouve dans un évidement dans l'une des surfaces périphériques limitant l'espace de montage (32), opposées l'une à l'autre, de l'organe d'entraînement (10) et/ou de l'organe de sortie (12).

4. Direction assistée à crémaillère selon la revendication 3,
**caractérisée en ce que**
le collier de serrage (24) est pourvu, à distance de ses zones marginales (34), de formations (35) s'étendant axialement, auxquelles est associé un évidement dans la surface périphérique associée de l'organe d'entraînement (10) ou de l'organe de sortie (12).

5. Direction assistée à crémaillère selon l'une quelconque des revendications précédentes,
**caractérisée en ce que**
le collier de serrage (24) est disposé radialement en regard de l'évidement recevant les formations (35) dans un évidement situé entre les évidements pour les paliers (22, 23).

6. Direction assistée à crémaillère selon la revendication 5,
**caractérisée en ce que**
les évidements recevant les paliers (22, 23) sont associés à l'organe de sortie (12).

7. Direction assistée à crémaillère selon l'une quelconque des revendications précédentes,
**caractérisée en ce que**
l'organe d'entraînement (10) est formé par une roue à denture hélicoïdale (11).

8. Direction assistée à crémaillère selon l'une quelconque des revendications précédentes,
**caractérisée en ce que**
l'organe de sortie (12) est formé par un pignon (13) en prise avec la crémaillère (6).

9. Direction assistée à crémaillère selon l'une quelconque des revendications 1 à 7,
**caractérisée en ce que**
l'organe de sortie (12) est connecté à l'arbre de direction (5) ou est formé par l'arbre de direction (5).

10. Direction assistée à crémaillère selon la revendication 9,
**caractérisée en ce que**
l'organe de sortie (12) est réalisé sous forme d'élément passant sur l'arbre de direction (5) et connecté à l'arbre de direction (5) en transmettant les couples, notamment est réalisé sous forme d'écrou de broche ou similaire.
